# EUROPÄISCHE PATENTSCHRIFT

(11) **EP 1 185 566 B1**
(45) Veröffentlichungstag und Bekanntmachung des Hinweises auf die Patenterteilung: **04.08.2004**
(21) Anmeldenummer: 00931194.5
(22) Anmeldetag: 11.05.2000
(51) Int. Cl.: C08F 279/02, C08F 4/62, C08F 36/04

(54) **VERFAHREN ZUR HERSTELLUNG VON KAUTSCHUKLÖSUNGEN IN STYROLISCHER LÖSUNG MIT STERISCH ANSPRUCHSVOLLEN CHELAT-KATALYSATOREN**
METHOD OF PRODUCING RUBBER COMPOSITIONS IN STYRENE SOLUTIONS WITH STERICALLY SUPERIOR CHELATE CATALYSTS
PROCEDE DE PRODUCTION DE SOLUTIONS DE CAOUTCHOUC DANS UNE SOLUTION DE STYRENE CONTENANT DES CATALYSEURS CHELATES STERIQUEMENT EXIGEANTS

(30) Priorität: 21.05.1999 DE 19923579; 18.04.2000 DE 10019111
(43) Veröffentlichungstag der Anmeldung: 13.03.2002
(73) Patentinhaber: BASF AKTIENGESELLSCHAFT, 67056 Ludwigshafen (DE)
(72) Erfinder: JÜNGLING, Stephan, D-68165 Mannheim (DE); SCHADE, Christian, D-67061 Ludwigshafen (DE); GAUSEPOHL, Hermann, D-67112 Mutterstadt (DE); WARZELHAN, Volker, D-67273 Weisenheim (DE); MOORS, Rainer, D-76726 Germersheim (DE); SCHÄCH, Hansjörg, D-67459 Böhl-Iggelheim (DE); QUEISSER, Joachim, D-68165 Mannheim (DE); LUINSTRA, Gerrit, D-78467 Konstanz (DE); DEMETER, Jürgen, D-67069 Ludwigshafen (DE)
(86) Internationale Anmeldenummer: PCT/EP2000/004275
(87) Internationale Veröffentlichungsnummer: WO 2000/071593

(56) Entgegenhaltungen:
- DE-A- 19 832 442
- US-A- 3 573 249
- DATABASE CHEMABS [Online] CHEMICAL ABSTRACTS SERVICE, COLUMBUS, OHIO, US; gefunden bei STN, acc. no. 78:137643, 4. Juni 1973 (1973-06-04) XP002146665 & JP 47 033178 B (INSTITUTE OF PHYSICAL AND CHEMICAL RESEARCH) 17. November 1972 (1972-11-17)

## Beschreibung

Die Erfindung betrifft ein Verfahren zur Polymerisation von Dienen in einem vinylaromatische Monomeren enthaltenden Lösungsmittel sowie ein Verfahren zur Herstellung von schlagzähem Polystyrol, Acrylnitril-Butadien-Styrol-Polymeren oder Methylmethacrylat-Butadien-Styrol-Copolymeren.

Zur Herstellung von schlagzähem Polystyrol sind verschiedene kontinuierliche und diskontinuierliche Verfahren in Lösung oder Suspension bekannt. Bei diesen Verfahren wird ein Kautschuk, üblicherweise Polybutadien in monomerem Styrol gelöst, welches in einer Vorreaktion bis zu einem Umsatz von ca. 30 % polymerisiert wurde. Durch die Bildung von Polystyrol und gleichzeitige Abnahme des monomeren Styrols kommt es zu einem Wechsel in der Phasenkohärenz. Während diesem als "Phaseninversion" bekannten Vorgang treten auch Pfropfungsreaktionen am Polybutadien auf, die zusammen mit der Rührintensität und der Viskosität die Einstellung der dispersen Weichphase beeinflussen. In der anschließenden Hauptpolymerisation wird die Polystyrolmatrix aufgebaut. Derartige in verschiedenen Reaktorarten durchgeführte Verfahren sind beispielsweise in A. Echte, Handbuch der technischen Polymerchemie, VCH Verlagsgesellschaft Weinheim 1993, Seiten 484-89 und den US-Patentschriften US 2 727 884 und 3 903 202 beschrieben.

Bei diesen Verfahren muß der separat hergestellte Kautschuk in aufwendiger Weise zerkleinert und gelöst werden und die so erhaltene Polybutadienkautschuklösung in Styrol vor der Polymerisation zur Entfernung von Gelteilchen filtriert werden.

Es wurde daher verschiedentlich versucht, die benötigte Kautschuklösung in Styrol direkt durch anionische Polymerisation von Butadien oder Butadien/Styrol in unpolaren Lösungsmitteln wie beispielsweise Cyclohexan oder Ethylbenzol und nachträgliche Zugabe von Styrol (GB 1 013 205, EP-A-0 334 715 und US 4 153 647) oder durch unvollständigen Umsatz von Butadien in Styrol (EP-A 0 059 231, EP-A 0 304 088) herzustellen. Der so hergestellte Blockkautschuk muß entweder durch Fällung gereinigt oder aber das Lösungsmittel sowie andere flüchtige Stoffe, insbesondere monomeres Butadien, abdestilliert werden. Aufgrund der hohen Lösungsviskosität können zudem nur relativ verdünnte Kautschuklösungen gehandhabt werden, was einen hohen Lösemittelverbrauch, Reinigungs- und Energieaufwand bedeutet.

US 3,299,178 beschreibt ein Verfahren zur Polymerisation von Butadien in styrolischer Lösung in Gegenwart eines Katalysatorsystems aus Aluminiumalkylen und Titantetraiodid bzw. Titantetrachlorid und Iod. Ein hoher Halogengehalt führt aber zu Korrosionsproblemen bei der Weiterverarbeitung der Kautschuklösung. Der Katalysator muß daher aufwendig entfernt werden.

Die WO 98/07765 und WO 98/07766 beschreiben anionische Polymerisationsverfahren von Butadien in Styrol. Die anionische Polymerisation von Styrol verläuft sehr schnell. Es wurden daher Erdalkalimetall-, Zink- und Aluminiumalkyle als retardierend wirkende Zusätze verwendet. Die beschriebenen Zusätze wirken sowohl retardierend auf die Polymerisationsgeschwindigkeit von Butadien als auch auf die Polymerisationsgeschwindigkeit von Styrol. Ohne Zusatz von sogenannten Randomizern entsteht bei der anionischen Polymerisation einer Monomerenmischung aus Styrol und Butadien zunächst ein fast reiner Homopolybutadienblock. Um die anschließende Styrolpolymerisation auf eine technisch gut kontrollierbare Geschwindigkeit zu verlangsamen, müssen die Zusätze in solchen Mengen zugegeben werden, daß die Polymerisationsgeschwindigkeit von Butadien zu sehr erniedrigt und das Gesamtverfahren unwirtschaftlich wird.

Aufgabe der vorliegenden Erfindung war es, ein Verfahren zur Polymerisation von Dienen in einem vinylaromatische Monomeren enthaltenden Lösungsmittel zu finden, das zu Dienkautschuken mit geringem Einbau von vinylaromatischen Monomeren bei gleichzeitig hohen Butadienumsätzen führt. Die Dienkautschuklösungen sollten möglichst direkt, das heißt ohne Entfernung von Katalysatorrückständen, Entgasung von nicht umgesetzten Dienen oder Ausfällen des Dienkautschukes, zur Herstellung von schlagzäh modifizierten Styrolpolymeren eingesetzt werden können.

Demgemäß wurde ein Verfahren zur Polymerisation von Dienen in einem vinylaromatische Monomeren enthaltenden Lösungsmittel gefunden, wobei man die Polymerisation in Gegenwart
a) einer organometallischen Verbindung von Ti, Zr, Hf, V, Nb, Ta, Cr, Mo, oder W als Katalysator,
b) einer Lewis-Säure als Cokatalysator,
c) gegebenenfalls einem Alkylierungsagens und
d) gegebenenfalls einem Regler durchführt.

Bevorzugt besteht das Lösungsmittel aus 85 bis 100 Gew.-% vinylaromatischen Monomeren und 0 bis 15 Gew.-% Toluol, Cyclohexan, Methylcyclohexan, Ethylbenzol oder Dekalin.

Als Katalysator setzt man bevorzugt einen organometallischen Chelat-Komplex von Ti, Zr, Hf, V, Nb, Ta, Cr, Mo, oder W mit mindestens einem über zwei O-Atome, zwei N-Atome oder ein O und ein N-Atom gebundenen Chelatliganden als Katalysator ein. Der Chelat-Komplex weist bevorzugt ein oder zwei Chelatliganden auf. Bevorzugte Katalysatoren sind organometallische Chelat-Komplexe der Formel (I), (II) oder (III) 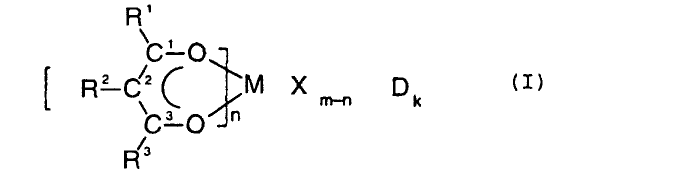 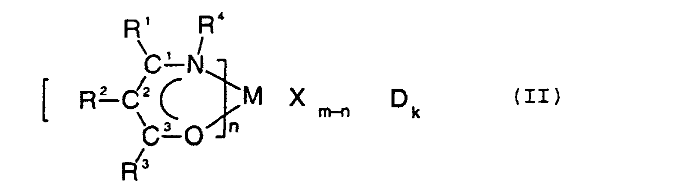 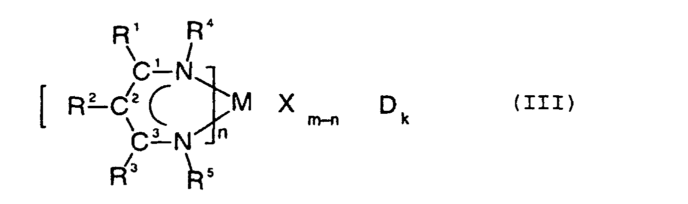 wobei
R¹, R², R³, R⁴ und R⁵ unabhängig voneinander Wasserstoff, unsubstituierte oder Halogen- oder Alkoxyl- substituierte
C₁-C₂₀-Alkyle, C₇-C₂₀ Arylalkyle, C₆-C₂₂-Aryle oder Alkylaryle, C₃-C₁₅-Cycloalkyle oder Alkylcycloalkyle, C₁- C₂₀-Alkoxyle, C₃-C₁₅-Cycloalkoxyle, C₆-C₂₂-Aryloxyle bedeuten oder mit ein oder mehreren von C¹, C², C³, O oder N ein mono-, bi- oder heterocyclisches, aliphatisches oder aromatisches Ringsystem mit 3 bis 15 Ringatomen bilden,
- M: Ti, Zr, Hf, V, Nb, Ta, Cr, Mo, W,
- X: ein Anion,
- D: ein neutraler Donorligand,
- n: 1, 2, 3 oder 4,
- m: die Wertigkeit von M,
- k: eine ganze oder gebrochene Zahl zwischen 0 und 10 bedeuten.

R¹, R², und R³ können unabhängig voneinander Wasserstoff, Methyl, i-Propyl, t.-Butyl, Cyclohexyl, Methoxyl, Ethoxyl, i-Propoxyl, t-Butoxyl, Cyclohexoxyl, Phenyl, (2,6-Di-tert-butyl)phenyl, (2,6-Di-tert-butyl-4-methyl)phenyl, Phenoxy, (2,6-Di-tert-butyl)phenoxy, (2,6-Di-tert-butyl-4-methyl)phenoxy und R⁴ und R⁵ unabhängig voneinander Wasserstoff, Methyl, i-Propyl, t.-Butyl, Cyclohexyl, Phenyl, (2,6-Di-isopropyl)phenyl, (2,6-Di-tert-butyl)phenyl, (2,6-Di-tert-butyl-4-methyl)phenyl, bedeuten.

Als Anion X kommen beispielsweise unsubstituierte oder Halogenoder Alkoxyl- substituierte C₁-C₂₀-Alkoxylate, C₃-C₁₅-Cycloalkoxylate, C₆-C₂₂-Arylalkoxylate, Tetraalkylsilyloxy, Dialkylamid, Bis(trialkylsilyl)amid, Halogenid, Sulfonate, wie Triflate, Cyanide, substituierte oder unsubstituierte Dialkyl- oder Diarylphosphate mit 1 bis 20 C-Atomen in Frage.

Als Donorliganden D in den Formeln (I) bis (III) kommen beispielsweise Tetrahydrofuran, Diethylether, Pyridin, Dioxan, Tetramethylendiamin oder Triethylamin in Betracht.

Als Chelatliganden können beispielsweise 2,2,6,6-Tetramethylheptan-3,5-dion, 2,2,4,6,6-Pentamethyl-heptan-3,5-dion, 1,3-Diphenyl-propan-1,3-dion, 1-(4-tert-Butylphenyl)-3-(4-methoxyphenyl)-propan-1,3-dion, 3-Phenyl-pentan-2,4-dion, 1,1,1-Trifluor-4-naphthyl-butan-2,4-dion, 3-Heptafluorobutyryl-(+)campher, 1,1,1,2,2-Pentafluor-6,6-dimethyl-heptan-3,5-dion, Salicylsäuretert-buytlester, Malonsäure-di-tert-butylester, Malonsäure-di-[(2,6-di-tert-butyl-4-methyl)phenyl]ester in deprotonierter Form einsetzt werden.

Besonders bevorzugt setzt man eine organometallische Verbindung des Titans als Katalysator ein, insbesondere Bis(2,2,6,6-Tetramethyl-3,5-heptandionato)Ti(IV)dichlorid, (2,2,6,6-Tetramethyl-3,5-heptandionato)Ti(III)dichlorid (THF-Addukt), (2,2,6,6-Tetramethyl-3,5-heptandionato)Ti(IV)triisopropoxid, (2,2,6,6-Tetramethyl-3,5-heptandionato)Ti(III)diisopropoxid (THF-Addukt), Bis(2,2,6,6-Tetramethyl-3,5-heptandionato)Ti(IV)diisopropoxid oder Bis(1-(4-tert.-Butylphenyl)-3-(4-methoxyphenyl)-1,3-propandion Ti(IV)diisopropoxid.

Besonders bevorzugte Komplexe der Formel (I) sind Bis(2,2,6,6-Tetramethyl-3,5-heptan-dionato)titan(IV)diisopropoxid oder Bis(2,2,6,6-Tetramethylheptan-3,5-dionato)titan(IV)dichlorid.

Bevorzugt wird ein Cokatalysator, der kein ionisch gebundenes Halogen enthält, eingesetzt. Beispielsweise eignen sich offenkettige oder cyclische Alumoxanverbindungen, wie Methylaluminoxan (MAO), Borane, vorzugsweise mit Fluor oder Fluoralkyl-Gruppen substituierte Phenylborane, wie Tris(pentafluorphenyl)boran oder Borate, wie Tetrakis(pentafluorphenyl)borat mit nichtkoordinierenden Gegenionen, vorzugsweise N,N-Dimethylanilinium.

Gegebenenfalls kann die Polymerisation zusätzlich zum Katalysator und Cokatalysator in Gegenwart eines Alkylierungsagens und/oder eines Reglers durchgeführt werden.

Als Alkylierungsagens können Alkylverbindungen des Aluminiums, Magnesiums oder Zinks mit mindestens einer C₁-C₂₀-Alkylgruppe einsetzt werden. Bevorzugt setzt man eine Mono-, Di- oder Trialkylaluminiumverbindung, beispielsweise Triethylaluminium oder Triisobutylaluminium als Alkylierungsagens ein.

Als Regler kommen Wasserstoffe, Aluminiumhydride, wie Dibutylaluminiumhydrid, Olefine, wie Ethylen, Propylen, Butylen, Hexen-1 oder Octen-1, Allylverbindungen, wie Allylmagnesiumbromid, Bisallylmagnesium, Phenylacetylen, Trimethylvinylsilan, Allylether, Allylhalogenide oder Allylester oder polare Comonomere, wie Methyl-, Ethyl-, Butyl-, Hexyl- oder Glycidyl-acrylate oder - methacrylate, Vinylacetate, Vinylimidazol, Vinylpyrrolidon, Vinylether, insbesondere Ethyl- oder Isobutylvinylether oder Acrylnitril in Frage. Durch den Regler läßt sich die Viskosität der Kautschuklösung einstellen.

Der Katalysator wird in der Regel in einem Molverhältnis von 1 : 100000 bis 1 : 1000, bezogen auf das Metall des Katalysators zum Dien, eingesetzt.

Das Molverhältnis von Katalysator zu Cokatalysator beträgt im allgemeinen 1 : 0,5 bis 1 : 10000, bei Organoaluminiumverbindungen als Cokatalysator bevorzugt 1 : 10 bis 1 : 10000, besonders bevorzugt 1 : 20 bis 1 : 2000, insbesondere 1 : 30 bis 1 : 1000. Im Falle von Borverbindungen als Cokatalysator beträgt das Molverhältnis Katalysator zu Cokatalysator bevorzugt 1 : 0,9 bis 1 : 2.

Falls ein Alkylierungsagens eingesetzt wird, beträgt das Molverhältnis von Alkylierungsagens zu Katalysator im allgemeinen 0,3 : 1 bis 10000 : 1. Der Regler wird im allgemeinen in Mengen zugegeben, die ein Molekulargewicht des Kautschukes im Bereich von 100000 bis 500000 g/mol, insbesondere 300000 bis 400000 g/mol, bewirken. Bei diesen Molekulargewichten sind die Viskositäten der Kautschuklösungen in einem technisch handhabbaren Bereich. Das Molverhältnis von Regler zu Katalysator beträgt in der Regel 0,5 : 1 bis 10000 : 1.

Falls ein Alkylierungsmittel verwendet wird, so wird dieses bevorzugt mit dem Katalysator vorgemischt und nach etwa 10 bis 60 Minuten mit den den Cokatalysator und gegebenenfalls Regler enthaltenden Monomeren zusammengebracht.

Bevorzugte Monomere sind 1,3-Butadien, Isopren, 2,3-Dimethylbutadien, 1,3-Pentadien, 1,3-Hexadiene oder Piperylen oder deren Mischungen.

Als Comonomere sowie als "Lösungsmittel" oder "Lösungsmittelkomponente" für das erfindungsgemäße Verfahren sind unter den vinylaromatischen Verbindungen beispielsweise Styrol, α-Methylstyrol, p-Methylstyrol, Ethylstyrol, tert.-Butylstyrol, Vinyltoluol oder 1,1-Diphenylethylen oder Mischungen davon geeignet. Besonders bevorzugt werden als "Lösungsmittel" oder "Lösungsmittelkomponente" Styrol.

Aus praktischen Gründen kann man eine geringere Menge eines weiteren Lösungsmittels verwenden. Als weiteres Lösungsmittel eignen sich aliphatische, cycloaliphatische oder aromatische Kohlenwasserstoffe mit 4 bis 12 Kohlenstoffatomen wie Pentan, Hexan, Heptan, Cyclohexan, Methylcyclohexan, Iso-Oktan, Benzol, Alkylbenzole wie Toluol, Xylol, Ethylbenzol oder Dekalin oder geeignete Gemische. Wird ein weiteres Lösungsmittel verwendet, so liegt in der Regel der Anteil der vinylaromatischen Verbindung an der Gesamtlösungsmittelmenge im Bereich von 85 bis 100 Gewichtsprozent, bevorzugt von 90 bis 100 Gewichtsprozent.

Die Ausgangskonzentration des Diens liegt im allgemeinen im Bereich von 3 bis 20, vorzugsweise 5 bis 10 Gew.-%, bezogen auf die Gesamtlösung.

Die Polymerisation der Diene wird in der Regel im Bereich von 0 bis 100°C, bevorzugt im Bereich von 20 bis 60°C durchgeführt.

Nach Erreichen des gewünschten Umsatzes kann die Polymerisation durch Deaktivierung des Katalysators mit protischen Verbindungen, wie Wasser, Carbonsäuren und/oder Alkohole, beendet werden.

Das erfindungsgemäße Verfahren liefert Polydiene mit einem relativ geringen Anteil an eingebauten vinylaromatischen Monomeren. Der Gehalt an 1,2-Vinylverknüpfungen liegt im allgemeinen im Bereich von 1 bis 25, bevorzugt 2 bis 10 mol-%, und der Gehalt an 1,2-trans-Verknüpfungen liegt in der Regel unterhalb von 50 mol-%, so daß eine unerwünschte Kristallisationsneigung des Produktes vermieden werden kann.

Gegebenenfalls können auch Gelinhibitoren, wie Kohlenwasserstoffhalogenide, Siliziumhalogenide und 1,2-Diolefine, eingesetzt werden. Die eingesetzten Mengen richten sich nach der im Einzelfall eingesetzten Verbindung. Das bevorzugt verwendete 1,2-Butadien setzt man im allgemeinen etwa in Mengen von 100 bis 3000 ppm ein.

Das nach dem erfindungsgemäßen Verfahren erhaltene Dienkautschuk kann in prinzipiell allen Verfahren eingesetzt werden, bei denen Kautschuklösungen in vinylaromatischen Verbindungen zum Einsatz kommen, die üblicherweise durch Auflösen des Kautschukes in der vinylaromatischen Verbindung und/oder zusätzlichen Lösungsmitteln erfolgt. Die Kautschuklösungen können, gegebenenfalls nach Zugabe weiterer Monomeren, auch von vinylaromatischen Verbindungen verschiedenen ethylenisch ungesättigten Verbindungen, Lösungsmittel und/oder Initiatoren unmittelbar einer anionischen oder einer thermisch oder durch Radikalstarter initiierten radikalischen Polymerisation unterworfen werden.

Insbesondere eignen sich die Kautschuklösungen zur Herstellung von vinylaromatische Monomere enthaltende Formmassen wie beispielsweise schlagzähes Polystyrol (HIPS), Acrylnitril-Butadien-Styrol-Polymere (ABS) und Methylmethacrylat-Butadien-Styrol-Copolymere (MBS).

Als Monomere für die Bildung der Matrix können der Dienkautschuklösung neben den oben genannte vinylaromatischen Verbindungen weitere ethylenisch ungesättigte Verbindungen, insbesondere aliphatische Vinylverbindungen wie Acrylnitril, Acryl- oder Methacrylester, beispielsweise die Methyl-, Ethyl-, Ethylhexyl- oder Cyclohexylester, Maleinsäureester, Maleinsäureanhydrid oder Maleinimid zugesetzt werden.

Als radikalische Initiatoren kommen Peroxide, beispielsweise Diacyl-, Dialkyl- Diarylperoxide, Peroxyester, Peroxidicarbonate, Peroxiketal, Peroxosulfate, Hydroperoxide oder Azoverbindungen in Betracht. Bevorzugt verwendet man Dibenzoylperoxid, 1,1-Di-tert.butylperoxocyclohexan, Dicumylperoxid, Dilaurylperoxid und Azobisisobutyronitril.

Als Hilfsmittel können Molekulargewichtsregler wie z.B. dimeres α-Methylstyrol, Mercaptane wie n-Dodecylmercaptan oder tert.-Dodecylmercaptan, Kettenverzweigungsmittel, Stabilisatoren oder Entformungsmittel zugesetzt werden.

Die Polymerisation der Matrix kann durchgehend in Masse oder in Lösung durchgeführt werden. Die Polymerisation erfolgt in der Regel bei Temperaturen zwischen 50 und 200°C, bevorzugt zwischen 90 und 150°C im Falle der radikalischen Polymerisation, bzw. zwischen 20 und 180°C, bevorzugt zwischen 30 und 80°C im Falle der anionischen Polymerisation. Die Reaktionsführung kann isotherm oder auch adiabatisch erfolgen.

Das erfindungsgemäße Verfahren bietet den Vorteil, daß sich die Formmassen ohne aufwendigen Wechsel des Reaktionsmediums in einer sogenannten "Eintopfreaktion" herstellen lassen. Zudem werden keine oder nur geringe Mengen an Lösungsmitteln benötigt, so daß deren Kosten sowie die Kosten für Reinigung und Aufarbeitung weitgehend entfallen.

In einer besonderen Ausführungsform führt man die Herstellung der Kautschuklösung und die Polymerisation der Matrix in einem durchgehend kontinuierlichen Verfahren durch. Hierzu polymerisiert man beispielsweise in einer ersten Reaktionszone den für die Bildung der Weichphase erforderliche Dienkautschuk wie oben beschrieben und führt ihn unmittelbar einer zweiten Reaktionszone zu. In dieser zweiten Reaktionszone können gegebenenfalls weitere vinylaromatische oder olefinische Monomeren in einer Menge, die zur Erreichung der Phaseninversion ausreicht, und gegebenenfalls weitere anionische oder radikalische Initiatoren sowie gegebenenfalls Lösungsmitteln zugegeben und bis zur Phaseninversion polymerisiert werden. In einer dritten Reaktionszone werden mit soviel vinylaromatischem oder olefinischen Monomer, als zur Bildung der schlagzäh modifizierten thermoplastischen Formmasse erforderlich ist, die Polymerisation anionisch oder radikalisch zu Ende geführt.

Die erhaltenen Formmassen können in üblicher Weise durch Entgaser oder Entgasungsextruder bei Normaldruck oder vermindertem Druck und Temperaturen von 190 bis 320°C von Lösungsmitteln und Restmonomeren befreit werden.

Wird auch die Matrix der kautschukmodifizierten Formmasse durch anionische Polymerisation aufgebaut, so kann es zweckmäßig sein, durch entsprechende Temperaturführung und/oder durch Zusatz von Peroxiden, insbesondere solche mit hoher Zerfallstemperatur wie beispielsweise Dicumylperoxid, eine Vernetzung der Kautschukpartikel zu erreichen.

### Beispiele

### Katalysatorsynthesen

Die Synthese der teilweise luft- und hydrolyseempfindlichen Katalysatorkomplexe erfolgte unter Inertgasatmosphäre mit getrockneten und entgasten Lösungsmitteln.

Die Synthese der Bis(β-Diketonat)-Katalysatorkomplexe erfolgte analog den Vorschriften in Yamamoto, A., Kambara, S., J. Am. Chem. Soc. 1957, 79, 4344-4348 und Wilkie, C. A., Lin, G.; Haworth, Inorg. Synth. Vol. 19, Ed. D. Shriver, Ch. 33, 145.
- A:: Bis(2,2,6,6-Tetramethyl-3,5-heptandionato)Ti(IV)dichlorid
- B:: (2,2,6,6-Tetramethyl-3,5-heptandionato)Ti(III)dichlorid (THF-Addukt)
- C:: (2,2,6,6-Tetramethyl-3,5-heptandionato)Ti(IV)triisopropoxid
- D:: (2,2,6,6-Tetramethyl-3,5-heptandionato)Ti(III)diisopropoxid (THF-Addukt)
- E:: Bis(2,2,6,6-Tetramethyl-3,5-heptandionato)Ti(IV)diisopropoxid
- F:: Bis(Eusolex-9020®*)Ti(IV)diisopropoxid
- G:: Tris(2,2,6,6-Tetramethyl-3,5-heptandionato)Ti(III)
- H:: 10 µmol 2,2,6,6-Tetramethyl-3,5-heptandion und 5 µmol Ti(IV)tetraisopropoxid

*Eusolex-9020® ist ein Produkt der Firma Merck KgaA mit der chemischen Bezeichnung 1-(4-tert.-Butylphenyl)-3-(4-methoxyphenyl)-1,3-propandion

### Synthese von Bis(2,2,6,6-Tetramethyl-3,5-heptandionato)-Titan(IV)diisopropoxid (Katalysator E)

Tetra(isopropoxy)titan Ti(OⁱPr)₄ (0,010 mol) wurden unter Stickstoff in 20 ml Dichlormethan in einem Rundkolben vorgelegt. Hierzu wurde innerhalb von 10 min eine Lösung von β-Diketon 2,2,6,6-Tetramethyl-3,5-heptandion (0,020 mol) in 10 ml Dichlormethan langsam zugegeben. Die Mischung wurde unter leichtem Stickstoffstrom 60 min gerührt und anschließend die flüchtigen Bestandteile im Vakuum bis zur vollständigen Trockene abgezogen. Es wurden zweimal jeweils 10 ml n-Pentan zugegeben und im Vakuum bis zur Trockene abgezogen, wobei ein weißes feinkristallines Produkt erhalten wurde. Entstandenes ⁱPropanol wurde durch das "Strippen" mit Pentan effektiv entfernt. Der ¹H-NMRspektroskopisch bestimmte Umsatz war quantitativ.

Der Komplex F wurde analog zu E hergestellt, mit dem Unterschied, daß als Diketon Eusolex-9020® verwendet wurde.

Der Mono-diketonat-Komplex C wurde analog synthetisiert. Im Unterschied zur Synthese von Katalysator E wurde ein Äquivalent an Ligand bezogen auf Tetra(isopropoxy)titan eingesetzt.

Das Titan(IV)halogenid A wurden auf analoge Weise synthetisiert, mit dem Unterschied, daß als Precursor TiCl₄ eingesetzt wurde.

Die Ti(III)-Komplex B und D wurden ausgehend von Ti(III)Cl₃•3THF und einem Äquivalent des β-Diketons synthetisiert. Im Falle des Isopropoxides D wurde das Halogenid B mit Isopropanol versetzt.

### Polymerisation von Butadien

Butadien und Toluol wurden über einen Trockenturm mit Aluminiumoxid-Füllung getrocknet. Styrol wurde unstabilisiert eingesetzt. Als Cokatalysatoren wurden Methylaluminoxan (MAO) (1,53 molare Lsg. in Toluol, Fa. Witco), Triisobutylaluminium (TIBA) (1,0 molare Lsg. in Toluol, Fa. Witco) und Triethylaluminium (TEA) (1 molare Lsg. in Hexan, Fa. Aldrich) verwendet.

Allylmagnesiumbromid wurde als 1 molare Lösung in Diethylether eingesetzt (Fa. Aldrich). Das verwendete Ethylen hatte eine Reinheit von 99,8 %.

Die Handhabung aller metallorganischen Verbindungen und die Durchführung der Reaktionen erfolgte unter Inertgasatmosphäre bzw. mit getrockneten und entgasten Lösungsmitteln.

### Beispiele 1 bis 6

Butadien und Toluol wurden über einen Trockenturm mit Aluminiumoxid-Füllung getrocknet. Styrol wurde unstabilisiert eingesetzt. Als Cokatalysator wurden 1000 Äquivalente, jeweils bezogen auf den Katalysatorkomplex A bis F, Methylaluminoxan (MAO) (1,53 molare Lsg. in Toluol, Fa. Witco) verwendet.

In einem Glaskolben mit Magnetrührer und Septumverschluß wurden unter Inertgas 15 µmol des entsprechenden Katalysatorkomplexes A bis F vorgelegt und bei 25°C jeweils 40 ml einer Lösung von 2 Gew.-% Butadien, 5 Gew.-% Styrol und 15 mmol Methylaluminoxan (MAO) in Toluol zugegeben. Die Reaktionsmischungen wurden dann 20 h bei 25°C gerührt. Anschließend wurde die Polymerisation durch den Zusatz von 2 ml Wasser abgebrochen. Die Bestimmung des Umsatzes und Charakterisierung der Polymeren erfolgte durch HPLC, GPC und NMR der organischen Phase.

Die Ergebnisse der Beispiele 1 bis 6 sind in Tabelle 1 zusammengestellt:

**Tabelle 1**

| Beispiel | Katalysator | 1,3-Butadienumsatz (%) | 1,2-Vinylgehalt des PBu (mol%) | Styrolgehalt (Gew.-%) | Molekular-gew.Mₚ in (kg/mol) |
|---|---|---|---|---|---|
| 1 | A | 98,7 | 5,9 | 6,8 | 756 |
| 2 | B | >99 | 3,2 | n.b. | 402 |
| 3 | C | 98,0 | 3,8 | 6,6 | 668 |
| 4 | D | >99 | 2,4 | 6,6 | 525 |
| 5 | E | 93,3 | 2,9 | 8,0 | 575 |
| 6 | F | 97 | n.b. | n.b. | 376 |
| n.b.: nicht bestimmt | | | | | |

### Beispiel 7

Die Polymerisation wurde in einem 250-ml-Stahlautoklaven mit Magnetrührer und Ölbad zur Temperierung durchgeführt. Vor dem Versuch wurde der Stahlautoklav mit Toluol/MAO in der Glove-Box ausgespült.

In einer Glovebox wurden 45 µmol Katalysator A in einem Stahlautoklaven vorgelegt und 45 mmol Methylaluminoxan (MAO) (30 ml einer 1,5 molaren Toluollösung) zugegeben. Der Autoklav wurde verschlossen und aus der Glovebox geschleust. Eine Monomermischung aus 90 g Styrol und 10 g Butadien wurde mit Stickstoff in den Autoklav gedrückt und anschließend 20 h bei 25°C mit einem Magnetrührer gerührt.

Innerhalb von 15 min stieg die Innentemperatur auf 36°C an und der Druck nahm von 3 auf 2 bar ab. Nach 20 h bei einer Temperatur von 25°C wurde entspannt und die Reaktionsmischung mit 6 ml vollentsalztem Wasser deaktiviert. Die Polymerlösung wurde mit Toluol verdünnt, filtriert und anschließend in Ethanol gefällt. Das Polymer wurde im Trockenschrank bei 50°C über Nacht getrocknet.
- Butadien-Umsatz: 98 %
- GPC (RI-Auswertung): Mp=855 kg/mol
- TG (DSC): -98,9°C
- 1,2-Vinylgehalt: 3,8 mol-%

### Beispiel 8

In einem mit Toluol ausgekochten 10-l-Juvokessel mit MIK-Rührer wurden 2700 g Styrol, 300 g Butadien und 300 mmol Methylaluminoxan (1,53 molar in Toluol) bei 25°C vorgelegt. Dann wurden 300 µmol Katalysator E als Toluollösung unter Stickstoff zugegeben. Die Innentemperatur stieg innerhalb von 4 min auf 52°C an. Nach einer Reaktionszeit von 2 h wurde eine Probe (ca. 30 g) aus der homogenen Reaktionsmischung entnommen und mit 2 ml Wasser versetzt. Zur Bestimmung des Feststoffgehaltes wurde ein Teil dieser Probe bei 160°C und 0,01 mbar getrocknet. Der andere Teil der Probe wurde zur Reinigung (für NMR und GPC) aus Toluol in Ethanol umgefällt und im Vakuum-Trockenschrank bei 50°C über Nacht getrocknet.
- Feststoffgehalt: 10,75 %
- GPC (RI-Auswertung): Mp = 970 kg/mol
- 1,2-Vinylgehalt des PBu: 3,5 mol-%
- Styrolgehalt des Butadienpolymeren: 7 Gew.-%.

### Beispiel 9 bis 20

In einer Glasampulle mit Magnetrührstab und Septumverschluß wurden unter Inertgas jeweils 15 µmol des entsprechenden Katalysatorkomplexes A, E oder G bzw. die Ausgangskomponenten des Katalysatorkomplexes (H) vorgelegt und nach etwa 15 Minuten bei 25 °C gegebenenfalls mit Triisobutylaluminium (TIBA) bzw. Triethylaluminium (TEA) versetzt. Anschließend wurden die Lösungen 20-30 min gerührt und dann jeweils mit 40 ml einer Lösung von 2 Gew.-% Butadien und 5 Gew.-% Styrol in Toluol (Monomermischung) versetzt. Zur weiteren Aktivierung des Katalysators wurde noch Methylaluminoxan (MAO) zugegeben. Nach den in Tabelle 2 angegebenen Reaktionszeiten wurde die Polymerisation durch Zusatz von 2 ml Wasser abgebrochen. Die Bestimmung des Umsatzes und Charakterisierung der Polymere erfolgte durch HPLC, GPC und NMR der organischen Phase.

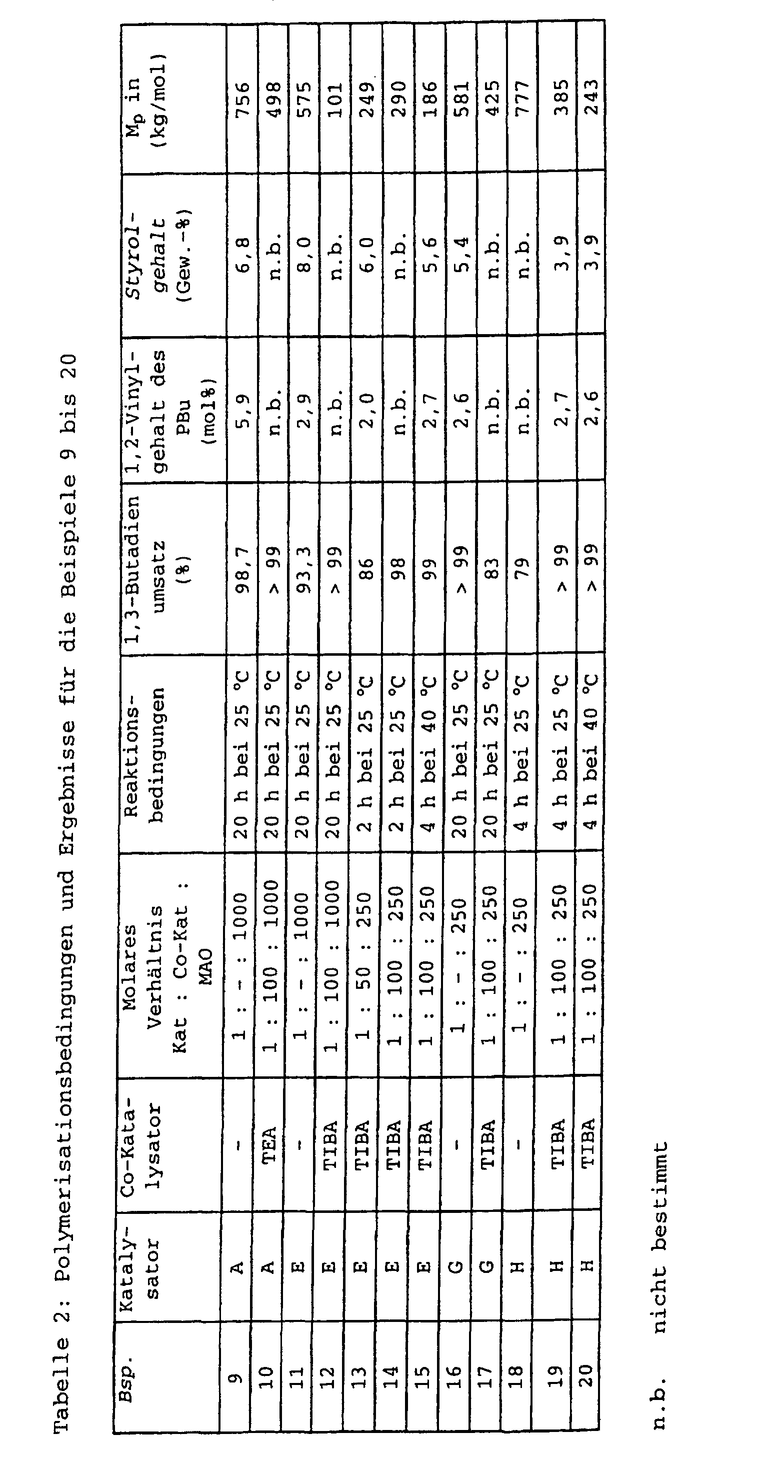

### Beispiele 21 bis 30

Bei den in Tabelle 3 zusammengefaßten Beispielen 21 bis 28 verfährt man bis zur Zugabe der Monomermischung wie bei den Beispielen 9 bis 20. Vor der Zugabe von Methylaluminoxan wird jedoch zusätzlich der in Tabelle 3 angegebene Regler zudosiert. Für die Beispiele 21 bis 30 wurde der Katalysator E, als Co-Katalysator TIBA und als Aktivator MAO im molaren Verhältnis Katalysator E : TIBA : MAO = 1 : 100 : 250 eingesetzt. Die Aufarbeitung der Reaktion und Charakterisierung der Polymere erfolgt analog den Beispielen in 9 bis 20.

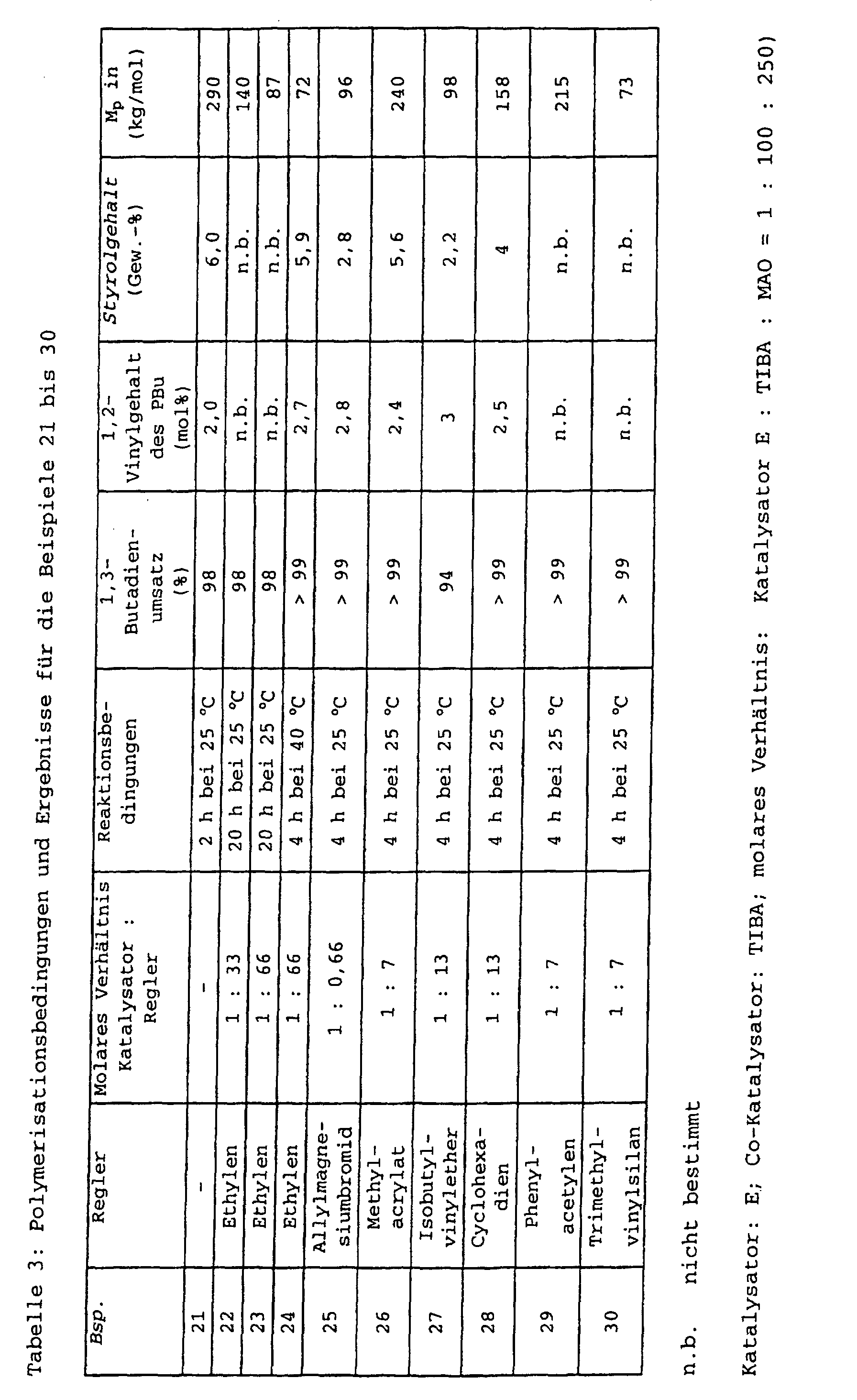

### Beispiel 31

In einem mit Toluol ausgekochten 10 l Juvokessel mit MIK-Rührer wurden 2700 g Styrol, 300g Butadien und 300 mmol Methylaluminoxan (1,53molar in Toluol) bei 25°C vorgelegt. Dann wurden 300 µmol Katalysator E und 30 mmol TIBA 30 min unter Rühren gemischt und unter Stickstoff dem Kesselinhalt zugegeben. Dabei stieg die, Innentemperatur innerhalb von 3 min auf 52°C an. Nach einer Reaktionszeit von 2 h wurde eine Probe (ca. 30g) aus der homogenen Reaktionsmischung entnommen und mit 2 ml Wasser versetzt. Zur Bestimmung des Feststoffgehaltes wurde ein Teil dieser Probe bei 160°C und 0,01 mbar getrocknet. Der andere Teil der Probe wurde zur Reinigung (für NMR und GPC) aus Toluol in Ethanol umgefällt und im Vakuum-Trockenschrank bei 50°C über Nacht getrocknet.
- Feststoffgehalt: 9,48 %
- GPC (RI-Auswertung): Mp = 802 kg/mol
- 1,2-Vinylgehalt des PBu: 4,1 mol%
- Styrolgehalt des Butadienpolymeren: 1,2 Gew.-%

### Beispiel 32

In einem mit Toluol ausgekochten 10 l Juvokessel mit MIK-Rührer wurden 2700 g Styrol und 75 mmol Methylaluminoxan (1,53molar in Toluol) bei 25°C vorgelegt. Dann wurde der Kessel auf etwa 0,09 bar evakuiert und anschließend Ethlen bis zu einem Druck von 2,0 bar aufgepreßt. Nach 75 minütigem Rühren des Kesselinhalts bei Raumtemperatur wurden 300 g Butadien zugepreßt und erneut der Kesselinhalt für 30 Minuten gerührt. Dann wurde der Katalysator in Form einer vorgemischten Lösung (30 min) von 300 µmol Katalysator E und 15 mmol TIBA zugesetzt. Dabei stieg die Innentemperatur innerhalb von 20 min auf 39°C an. Nach einer Reaktionszeit von 2 h wurde eine Probe (ca. 30 g) aus der homogenen Reaktionsmischung entnommen und mit 2 ml Wasser versetzt und analog der Probe in Beispiel 31 aufgearbeitet.
- Feststoffgehalt: 9,0 %
- GPC (RI-Auswertung): Mp = 285 kg/mol
- 1,2-Vinylgehalt des PBu: 4,1 mol%
- Styrolgehalt des Butadienpolymeren: 3,7 Gew.-%

## Patentansprüche

1. Verfahren zur Polymerisation von Dienen in einem vinylaromatische Monomeren enthaltenden Lösungsmittel, **dadurch gekennzeichnet, daß** man die Polymerisation in Gegenwart
a) einer organometallischen Verbindung von Ti, Zr, Hf, V, Nb, Ta, Cr, Mo, oder W als Katalysator,
b) einer Lewis-Säure als Cokatalysator,
c) gegebenenfalls einem Alkylierungsagens und
d) gegebenenfalls einem Regler durchführt.

2. Verfahren nach Anspruch 1, **dadurch gekennzeichnet, daß** das Lösungsmittel aus 85 bis 100 Gew.-% vinylaromatische Monomeren und 0 bis 15 Gew.-% Toluol, Cyclohexan, Methylcyclohexan, Xylol, Ethylbenzol oder Dekalin besteht.

3. Verfahren nach Anspruch 1 oder 2, **dadurch gekennzeichnet, daß** man einen organometallischen Chelat-Komplex von Ti, Zr, Hf, V, Nb, Ta, Cr, Mo oder W mit mindestens einem über zwei O-Atome, zwei N-Atome oder ein O- und ein N-Atom gebundenen Chelatliganden als Katalysator einsetzt.

4. Verfahren nach einem der Ansprüche 1 bis 3, **dadurch gekennzeichnet, daß** man einen organometallischen Chelat-Komplex der Formel (I), (II) oder (III) 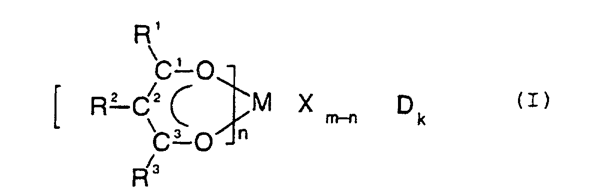 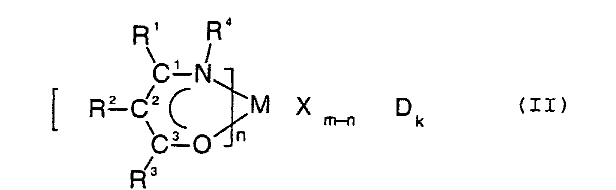 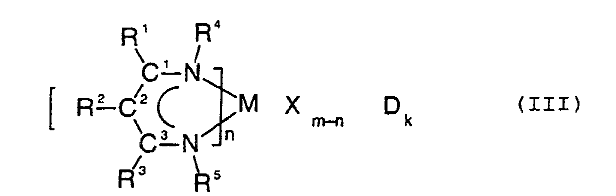 als Katalysator einsetzt, wobei
R¹, R², R³, R⁴ und R⁵ unabhängig voneinander Wasserstoff, unsubstituierte oder Halogen- oder Alkoxyl- substituierte C₁-C₂₀-Alkyle, C₇-C₂₀-Arylalkyle, C₆-C₂₂-Aryle oder Alkylaryle, C₃-C₁₅-Cycloalkyle oder Alkylcycloalkyle, C₁-C₂₀-Alkoxyle, C₃-C₁₅-Cycloalkoxyle, C₆-C₂₂-Aryloxyle bedeuten oder mit ein oder mehreren von C¹, C², C³, O oder N ein mono-, bi- oder heterocyclisches, aliphatisches oder aromatisches Ringsystem mit 3 bis 15 Ringatomen bilden,
M Ti, Zr, Hf, V, Nb, Ta, Cr, Mo, W,
X ein Anion
D ein neutraler Donorligand,
n 1,2,3 oder 4,
m die Wertigkeit von M,
k eine ganze oder gebrochene Zahl zwischen 0 und 10
bedeuten.

5. Verfahren nach Anspruch 3 oder 4, **dadurch gekennzeichnet, daß** der Chelat-Komplex ein oder zwei Chelatliganden aufweist.

6. Verfahren nach einem der Ansprüche 1 bis 5, **dadurch gekennzeichnet, daß** man Bis(2,2,6,6-Tetramethyl-3,5-heptandionato)-Ti(IV)dichlorid, (2,2,6,6-Tetramethyl-3,5-heptandionato)-Ti(III)dichlorid (THF-Addukt), (2,2,6,6-Tetramethyl-3,5-heptandionato)Ti(IV)triisopropoxid, (2,2,6,6-Tetramethyl-3,5-heptandionato)Ti(III)diisopropoxid (THF-Addukt), Bis(2,2,6,6-Tetramethyl-3,5-heptandionato)Ti(IV)diisopropoxid, Bis(1-(4-tert.-Butylphenyl)-3-(4-methoxyphenyl)-1,3-propandionato)-Ti(IV)diisopropoxid oder Tris(2,2,6,6-Tetramethyl-3,5-heptandionato)Ti(III) als Katalysator einsetzt.

7. Verfahren nach einem der Ansprüche 1 bis 6, **dadurch gekennzeichnet, daß** man eine offenkettige oder cyclische Alumoxanverbindung, ein Boran oder Borat als Cokatalysator einsetzt.

8. Verfahren nach einem der Ansprüche 1 bis 7, dadurch gekennzeichent, daß man eine Alkylverbindung des Aluminiums, Magnesiums oder Zinks mit mindestens einer C₁-C₂₀-Alkylgruppe als Alkylierungsagens einsetzt.

9. Verfahren nach einem der Ansprüche 1 bis 13, **dadurch gekennzeichnet, daß** man eine Trialkylaluminiumverbindung als Alkylierungsagens einsetzt.

10. Verfahren nach einem der Ansprüche 1 bis 14, **dadurch gekennzeichnet, daß** man ein Olefin, eine Allylverbindung oder ein polares Comonomer als Regler einsetzt.

11. Verfahren nach einem der Ansprüche 1 bis 10, **dadurch gekennzeichnet, daß** man 1,3-Butadien oder Isopren als Diene einsetzt.

12. Verfahren nach einem der Ansprüche 1 bis 11, **dadurch gekennzeichnet, daß** man Styrol, α-Methylstyrol, p-Methylstyrol, 1,1-Diphenylethylen oder deren Mischungen als vinylaromatische Monomere einsetzt.

13. Verfahren zur Herstellung von schlagzähem Polystyrol, Acrylnitril-Butadien-Styrol-Polymeren oder Methylmethacrylat-Butadien-Styrol-Copolymeren, **dadurch gekennzeichnet, daß** man eine gemäß einem Verfahren nach einem der Ansprüche 1 bis 10 hergestellte Kautschuklösung einsetzt.

14. Verfahren zur kontinuierlichen Herstellung von schlagzäh modifizierten thermoplastischen Formmassen, die eine kautschukhaltige Weichphase dispers verteilt in einer vinylaromatischen Hartmatrix enthalten, **dadurch gekennzeichnet, daß** man
a) in einer ersten Reaktionszone Diene in einem vinylaromatische Monomeren enthaltenden Lösungsmittel in Gegenwart einer organometallischen Verbindung von Ti, Zr, Hf, V, Nb, Ta, Cr, Mo oder W als Katalysator und einer Lewis-Säure als Cokatalysator, gegebenenfalls eines Alkylierungsagens und gegebenenfalls eines Reglers polymerisiert,
b) den erhaltenen Dienkautschuk einer zweiten Reaktionszone zugeführt, in der man gegebenenfalls unter Zugabe weiterer vinylaromatischer Monomeren oder copolymerisierbaren Monomeren in einer Menge, die zur Erreichung der Phaseninversion ausreicht, bis zur Phaseninversion anionisch oder radikalisch polymerisiert und
c) in einer dritten Reaktionszone mit soviel vinylaromatischem Monomer, als zur Bildung der schlagzäh modifizierten thermoplastischen Formmasse erforderlich ist, die Polymerisation anionisch oder radikalisch zu Ende führt.

## Claims

1. A process for polymerizing dienes in a solvent comprising vinylaromatic monomers, which comprises carrying out the polymerization in the presence of
a) an organometallic compound of Ti, Zr, Hf, V, Nb, Ta, Cr, Mo or W as catalyst,
b) and of Lewis acid as cocatalyst,
c) and, where appropriate, of an alkylating agent, and
d) where appropriate of a regulator.

2. A process as claimed in claim 1, wherein the solvent is composed of from 85 to 100% by weight of vinylaromatic monomers and from 0 to 15% by weight of toluene, cyclohexane, methylcyclohexane, xylene, ethylbenzene or decalin.

3. A process as claimed in claim 1 or 2, wherein the catalyst used comprises an organometallic chelate complex of Ti, Zr, Hf, V, Nb, Ta, Cr, Mo or W having at least one chelating ligand bonded via two O atoms, two N atoms, or one O and one N atom.

4. A process as claimed in any of claims 1 to 3, wherein the catalyst used comprises an organometallic chelate complex of the formula (I), (II) or (III) 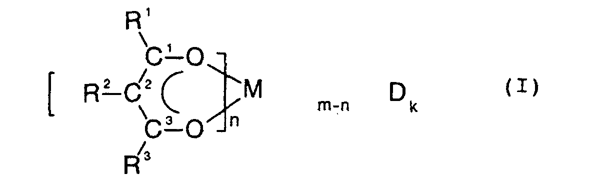 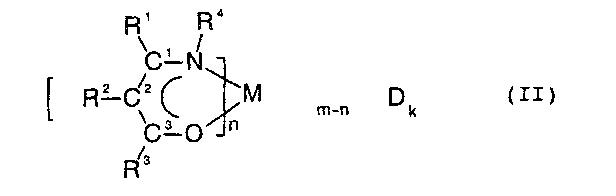 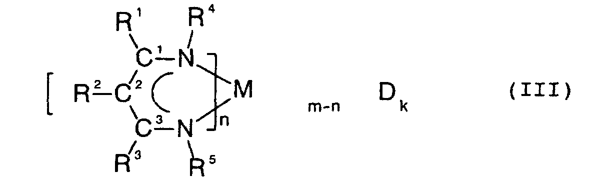 where
R¹, R², R³, R⁴ and R⁵, independently of one another, are hydrogen, unsubstituted or halo- or alkoxy-substituted C₁-C₂₀-alkyl, C₇-C₂₀-arylalkyl, C₆-C₂₂-aryl or alkylaryl, C₃-C₁₅-cycloalkyl or alkylcycloalkyl, C₁-C₂₀-alkoxy, C₃-C₁₅-cycloalkoxy or C₆-C₂₂-aryloxy, or, with one or more of C¹, C², C³, O or N, form a mono-, bi- or heterocyclic, aliphatic or aromatic ring system having from 3 to 15 ring atoms,
M is Ti, Zr, Hf, V, Nb, Ta, Cr, Mo, W,
X is an anion,
D is a neutral donor ligand,
n is 1, 2, 3 or 4,
m is the valency of M,
k is an integral or fractional number from 0 to 10.

5. A process as claimed in claim 3 or 4, wherein the chelate complex has one or two chelating ligands.

6. A process as claimed in any of claims 1 to 5, wherein the catalyst used comprises
bis(2,2,6,6-tetramethyl-3,5-heptanedionato)Ti(IV) dichloride, (2,2,6,6-tetramethyl-3,5-heptanedionato)Ti(III) dichloride (THF adduct), (2,2,6,6-tetramethyl-3,5-heptanedionato)Ti(IV) triisopropoxide, (2,2,6,6-tetramethyl-3,5-heptanedionato)Ti(III) diisopropoxide (THF adduct), bis(2,2,6,6-tetramethyl3,5-heptanedionato)Ti(IV) diisopropoxide, bis(1-(4-tert-butylphenyl)-3-(4-methoxyphenyl)-1,3-propane-dionato)Ti(IV) diisopropoxide, or tris(2,2,6,6-tetramethyl-3,5-heptanedionato)Ti(III).

7. A process as claimed in any of claims 1 to 6, wherein the cocatalyst used comprises an open-chain or cyclic aluminoxane compound, a borane or a borate.

8. A process as claimed in any of claims 1 to 7, wherein the alkylating agent used comprises an alkyl compound of aluminum, of magnesium, or of zinc, having at least one C₁-C₂₀-alkyl group.

9. A process as claimed in any of claims 1 to 8, wherein the alkylating agent used comprises a trialkylaluminum compound.

10. A process as claimed in any of claims 1 to 9, wherein the regulator used comprises an olefin, an allyl compound, or a polar comonomer.

11. A process as claimed in any of claims 1 to 10, wherein the dienes used comprise 1,3-butadiene or isoprene.

12. A process as claimed in any of claims 1 to 11, wherein the vinylaromatic monomers used comprise styrene, α-methylstyrene, p-methylstyrene, 1,1-diphenylethylene or mixtures of these.

13. A process for preparing impact-modified polystyrene, acrylonitrile-butadiene-styrene polymers or methyl methacrylate-butadiene-styrene copolymers, which comprises using a rubber solution prepared by a process as claimed in any of claims 1 to 10.

14. A process for the continuous preparation of impact-modified thermoplastic molding compositions comprising a rubber-containing soft phase dispersed in a vinylaromatic hard matrix, which comprises
a) polymerizing dienes in a first reaction zone in a solvent comprising vinylaromatic monomers in the presence of an organometallic compound of Ti, Zr, Hf, V, Nb, Ta, Cr, Mo or W as catalyst and of a Lewis acid as cocatalyst, and, where appropriate, of an alkylating agent, and, where appropriate, of a regulator,
b) introducing the resultant diene rubber to a second reaction zone in which anionic or free-radical polymerization is carried out as far as phase inversion, if desired with addition of other vinylaromatic monomers or copolymerizable monomers in amounts sufficient for phase inversion to be reached, and
c) carrying the polymerization to completion by an anionic or free-radical route in a third reaction zone, with an amount of vinylaromatic monomer sufficient to form the impact-modified thermoplastic molding composition.

## Revendications

1. Procédé de polymérisation de diènes dans un solvant contenant des monomères vinylaromatiques, **caractérisé en ce que** l'on entreprend la polymérisation en présence
a) d'un composé organométallique de Ti, Zr, Hf, V, Nb, Ta, Cr, Mo, ou W en tant que catalyseur,
b) d'un acide de Lewis en tant que cocatalyseur,
c) éventuellement d'un agent d'alkylation et
d) éventuellement d'un régulateur.

2. Procédé selon la revendication 1, **caractérisé en ce que** le solvant est constitué de 85 à 100 en poids de monomères vinylaromatiques et de 0 à 15% en poids de toluène, de cyclohexane, de méthylcyclohexane, de xylène, d'éthylbenzène ou de décaline.

3. Procédé selon la revendication 1 ou 2, **caractérisé en ce que** l'on met en oeuvre un complexe chélaté de Ti, Zr, Hf, V, Nb, Ta, Cr, Mo ou W avec au moins un ligand chélaté lié via deux atomes de O, deux atomes de N ou un atome de O et un atome de N, en tant que catalyseur.

4. Procédé selon l'une quelconque des revendications 1 à 3, **caractérisé en ce que** l'on met en oeuvre en tant que catalyseur un complexe chélaté organométallique de formule (I), (II) ou (III) 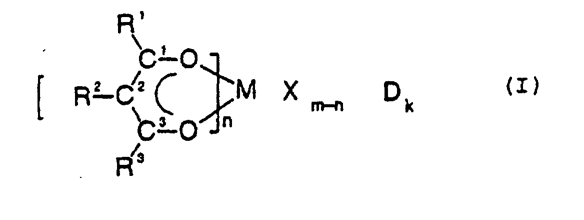 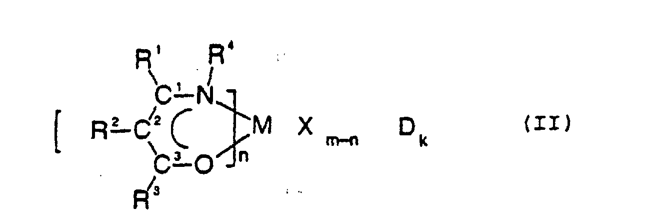 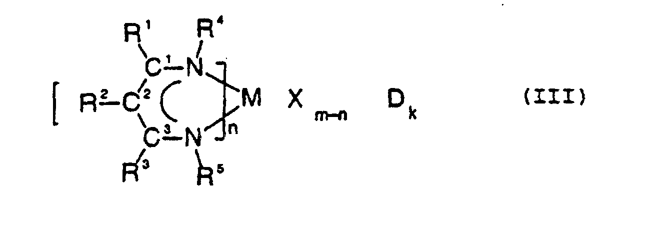 où
R¹, R², R³, R⁴ et R⁵ représentent indépendamment les uns des autres de l'hydrogène, des radicaux alkyle en C₁ à C₂₀, arylalkyle en C₇ à C₂₀, aryle ou alkylaryle en C₆ à C₂₂, cycloalkyle ou alkylcycloalkyle en C₃ à C₁₅, alcoxyle en C₁ à C₂₀, cycloalcoxyle en C₃ à C₁₅, aryloxyle en C₆ à C₂₂, non substitués ou substitués par de l'halogène ou de l'alcoxyle, ou bien forment avec un ou plusieurs de C¹, C², C³, O ou N, un système de noyau mono-, bi- ou hétérocyclique, aliphatique ou aromatique, comportant de 3 à 15 atomes cycliques,
M représente Ti, Zr, Hf, V, Nb, Ta, Cr, Mo, W,
X représente un anion,
D représente un ligand donneur neutre,
n a une valeur de 1, 2, 3 ou 4,
m est la valence de M,
k est un nombre entier ou fractionnaire entre 0 et 10.

5. Procédé selon la revendication 3 ou 4, **caractérisé en ce que** le complexe chélaté présente un ou deux ligands chélates.

6. Procédé selon l'une quelconque des revendications 1 à 5, **caractérisé en ce que** l'on met en oeuvre du dichlorure de bis(2,2,6,6-tétraméthyl-3,5-heptanedionato)-Ti(IV), du dichlorure de (2,2,6,6-tétraméthyl-3,5-heptanedionato)-Ti(III) (produit d'addition de THF), du triisopropoxyde de (2,2,6,6-tétraméthyl-3,5-heptanedionato)-Ti(IV), du diisopropoxyde de (2,2,6,6-tétraméthyl-3,5-heptanedionato)-Ti(III) (produit d'addition de THF), du diisopropoxyde de bis(2,2,6,6-tétraméthyl-3,5-heptanedionato)-Ti(IV), du diisopropoxyde de bis(1-(4-tert.-butylphényl)-3-(4-méthoxyphényl)-1,3-propanedionato)-Ti(IV) ou du tris(2,2,6,6-tétraméthyl-3,5-heptanedionato)-Ti(III) en tant que catalyseur.

7. Procédé selon l'une quelconque des revendications 1 à 6, **caractérisé en ce que** l'on met en oeuvre comme cocatalyseur un composé d'alumoxane à chaîne ouverte ou cyclique, un borane ou un borate.

8. Procédé selon l'une quelconque des revendications 1 à 7, **caractérisé en ce que** l'on met en oeuvre un composé alkylique d'aluminium, de magnésium ou de zinc avec au moins un radical alkyle en C₁ à C₂₀ comme agent d'alkylation.

9. Procédé selon l'une quelconque des revendications 1 à 8, **caractérisé en ce que** l'on met en oeuvre un composé de trialkylaluminium en tant qu'agent d'alkylation.

10. Procédé selon l'une quelconque des revendications 1 à 9, **caractérisé en ce que** l'on met en oeuvre une oléfine, un composé allylique ou un comonomère polaire en tant que régulateur.

11. Procédé selon l'une quelconque des revendications 1 à 10, **caractérisé en ce que** l'on met en oeuvre du 1,3-butadiène ou de l'isoprène en tant que diènes.

12. Procédé selon l'une quelconque des revendications 1 à 11, **caractérisé en ce que** l'on met en oeuvre du styrène, de l'α-méthylstyrène, du p-méthylstyrène, du 1,1-diphényléthylène ou leurs mélanges en tant que monomères vinylaromatiques.

13. Procédé de préparation de polystyrène à haute résistance au choc, de polymères d'acrylonitrile - butadiène - styrène ou de copolymères de méthacrylate de méthyle - butadiène - styrène, **caractérisé en ce que** l'on met en oeuvre une solution de caoutchouc préparée par un procédé selon l'une quelconque des revendications 1 à 10.

14. Procédé de préparation en continu de masses de moulage thermoplastique modifiées à haute résistance au choc, contenant une phase molle contenant du caoutchouc répartie de manière dispersée dans une matrice dure vinylaromatique, **caractérisé en ce que**
a) dans une première zone de réaction, on polymérise des diènes dans un solvant contenant des monomères vinylaromatiques en présence d'un composé organométallique de Ti, Zr, Hf, V, Nb, Ta, Cr, Mo ou N en tant que catalyseur et d'un acide de Lewis en tant que cocatalyseur, éventuellement d'un agent d'alkylation et éventuellement d'un régulateur,
b) on envoie le caoutchouc diène ainsi obtenu dans une deuxième zone de réaction, dans laquelle, éventuellement avec addition d'autres monomères vinylaromatiques ou de monomères copolymérisables en une quantité suffisante pour atteindre l'inversion de phase, on polymérise par voie anionique ou radicalaire jusqu'à l'inversion de phase, et
c) dans une troisième zone de réaction, on achève la polymérisation, par voie anionique ou radicalaire, avec autant de monomères vinylaromatiques qu'il est nécessaire pour la formation de la masse de moulage thermoplastique modifiée à haute résistance au choc.
